# FASCICULE DE BREVET EUROPEEN

(11) **EP 3 674 531 B1**
(45) Date de publication et mention de la délivrance du brevet: **06.11.2024**
(21) Numéro de dépôt: 19214032.5
(22) Date de dépôt: 06.12.2019
(51) Int. Cl.: F02C 7/14, F28D 1/02, F28F 13/08

(54) **ÉCHANGEUR DE CHALEUR AIR-HUILE**
LUFT-ÖL-WÄRMETAUSCHER
AIR-OIL HEAT EXCHANGER

(30) Priorité: 24.12.2018 BE 201805939
(43) Date de publication de la demande: 01.07.2020
(73) Titulaire: Safran Aero Boosters SA, 4041 Herstal (BE)
(72) Inventeur: WEICKER, David, 4041 Herstal (BE); VLEUGELS, Roel, 4041 Herstal (BE); FELLIN, Nicolas, 4041 Herstal (BE)
(74) Mandataire: Lecomte & Partners

(56) Documents cités:
- EP-A1- 3 012 436
- EP-A1- 3 012 443
- WO-A1-2012/001759
- WO-A1-2019/206795

## Description

### Domaine technique

L'invention se rapporte au domaine des échangeurs de chaleur de turbomachine. Plus précisément, l'invention propose un échangeur de chaleur air/huile de turbomachine.

### Technique antérieure

Le document US 2016/0108815 A1 divulgue un échangeur air/huile pour aéronefs. Cet échangeur comprend un corps de forme sensiblement arquée et muni d'une multitude d'ailettes de refroidissement agencées selon plusieurs étages radiaux. Entre deux étages radiaux successifs d'ailettes se trouvent des passages circonférentiels pour l'huile.

Un tel échangeur de chaleur génère des perturbations importantes dans le flux d'air.

Les documents EP 3012436 A1 et EP 3012443 A1 divulguent des échangeurs de chaleur de l'art antérieur.

### Résumé de l'invention

### Problème technique

L'invention a pour objectif de proposer un échangeur de chaleur qui minimise les pertes aérodynamiques dans le flux d'air induites par la présence de l'échangeur mais aussi de diminuer les pertes aérodynamiques à l'intérieur de l'échangeur. L'invention vise également à optimiser l'échange thermique. L'invention a également pour objectif de proposer une solution simple et compacte, fiable, facile à produire et commode d'entretien.

### Solution technique

L'invention a pour objet une matrice pour échangeur de chaleur selon la revendication 1, la matrice comprenant : une enveloppe avec une surface intérieure délimitant spatialement une traversée pour l'écoulement d'un premier fluide, et une surface extérieure, l'enveloppe étant de forme générale arquée, définissant une direction axiale qui est la direction principale d'écoulement du premier fluide, ainsi qu'une direction radiale et une direction circonférentielle, la surface extérieure définissant un profil extérieur de la matrice, vu dans un plan perpendiculaire à la direction principale ; et un réseau s'étendant dans la traversée et dans lequel circule le deuxième fluide ; remarquable en ce que selon la direction axiale, le profil extérieur varie radialement et circonférentiellement.

La direction radiale et la direction circonférentielle sont toutes deux perpendiculaires à la direction axiale en tout point.

Les variations du profil se traduisent par le fait que le profil extérieur de l'enveloppe dans un plan donné perpendiculaire à la direction axial est différent du profil extérieur dans un autre plan, parallèle au plan donné.

Une autre définition possible des variations du profil extérieur radialement et circonférentiellement peut être la suivante : tout point de la surface externe qui parcourt axialement la surface en conservant sa position circonférentielle a une position radiale qui varie ; et tout point de la surface externe qui parcourt axialement la surface en conservant sa position radiale a une position circonférentielle qui varie.

En termes de courbes, ces variations de profil se traduisent par : toute courbe intersection de la surface externe et d'un plan radial montre des variations radiales et toute courbe intersection de la surface externe et d'un cylindre d'axe celui de la courbure générale de l'échangeur montre des variations circonférentielles. Plus précisément, la variation circonférentielle se manifeste par le fait que le profil extérieur (P) a une largeur circonférentielle (L), la largeur circonférentielle (L) variant entre une largeur circonférentielle minimale (L(B')) et une largeur circonférentielle maximale (L(B)), la largeur circonférentielle maximale (L(B)) étant au moins 1 0% supérieure à la largeur circonférentielle minimale (L(B')), et la variation radiale se manifeste par le fait que le profil extérieur (P) a un point médian radialement extérieur (A, A'), la coordonnée radiale de ce point médian (R(A), R(A')) variant entre une coordonnée minimale (R(A')) à une position extrême amont de la matrice et une coordonnée maximale (R(A)), la coordonnée radiale maximale (R(A)) étant au moins 1 0% supérieure à la coordonnée radiale minimale (R(A')).

Selon des modes avantageux de l'invention, la matrice peut comprendre l'une ou plusieurs des caractéristiques suivantes, selon toute combinaison possible :
- le profil s'agrandit radialement et circonférentiellement dans la partie amont de la matrice. Par exemple, le profil peut grandir radialement et circonférentiellement dans une portion amont de l'étendue axiale de la matrice d'au moins 5, 10, 20 ou 30% de la longueur axiale de la matrice ;
- le profil se rétrécit radialement et circonférentiellement dans la partie aval de la matrice. Par exemple, le profil peut rétrécir radialement et circonférentiellement dans une portion aval de l'étendue axiale de la matrice d'au moins 5, 10, 20 ou 30% de la longueur axiale de la matrice ;
- l'épaisseur de l'enveloppe varie axialement, circonférentiellement et radialement. L'épaisseur est la distance en tout point entre la surface interne et la surface externe de l'enveloppe. Pour un profil donné (position axiale donnée), l'épaisseur peut varier en tout point. Vu parallèlement à l'axe, l'épaisseur peut varier (radialement augmenter ou diminuer ; circonférentiellement augmenter ou diminuer). Enfin, la dimension axiale, c'est-à-dire la distance parcourue par l'air entre l'entrée dans la matrice et sa sortie, peut varier circonférentiellement et radialement ;

- le réseau subdivise la traversée en une pluralité de couloirs, chaque couloir ayant, dans un plan perpendiculaire à la direction axiale, une section qui varie axialement ;
- les sections des couloirs et le profil extérieur varient selon une tendance commune. Ainsi, lorsque l'enveloppe extérieure s'agrandit, les couloirs peuvent s'agrandir également, selon les mêmes proportions. Alternativement, les couloirs peuvent évoluer inversement à la tendance de l'enveloppe : l'épaisseur du réseau peut évoluer pour rétrécir les couloirs lorsque l'enveloppe s'agrandit ;
- l'enveloppe et le réseau sont monoblocs, réalisés par fabrication additive ;
- le réseau est un entre-croisement de tubulures formant des couloirs dans la traversée. Vu perpendiculairement à la direction axiale, les couloirs peuvent dessiner une pluralité homogène ou hétérogène de formes géométriques régulières ou non régulières. Par exemple, des couloirs de forme polygonale (losange, pentagone, etc.) ou elliptique. Les tubulures peuvent avoir des sections internes en rectangle et/ou peuvent avoir un profil externe profilé aérodynamiquement, par exemple pour minimiser les pertes de charge ou pour aider à la portance de l'aéronef ;
- les tubulures peuvent être conformes aux enseignements du document WO 2018/065304 A1. Par exemple, des ailettes de refroidissement successivement inclinées peuvent être positionnées dans les couloirs pour que l'air suive un parcours hélicoïdal.

La matrice selon l'invention peut être apte à réaliser des fonctions supplémentaires en plus de l'échange de chaleur entre les deux fluides. Par exemple, des logements peuvent être prévus pour recevoir des éléments de chauffage tel que des crayons chauffants des résistances électriques, et/ou des films chauffants pour chauffer le premier et/ou le second fluide lorsque celui-ci/ceux-ci ont une température inférieure à un seuil de fonctionnement, par exemple 20°C. Aussi, un réseau de passage peut être aménagé dans la matrice pour un troisième fluide s'écoulant transversalement au premier et au second fluide.

L'invention a également pour objet un échangeur de chaleur muni d'une telle matrice, l'échangeur étant remarquable en ce qu'il présente un collecteur d'entrée et un collecteur de sortie pour le second fluide, les collecteurs étant monoblocs avec la matrice, et les collecteurs pouvant être tous deux agencés circonférentiellement du même côté de la matrice.

Selon des modes avantageux de l'invention, l'échangeur peut comprendre l'une ou plusieurs des caractéristiques suivantes, selon toute combinaison possible :
- un by-pass reliant le collecteur d'entrée au collecteur de sortie, le by-pass étant monobloc avec la matrice. Par by-pass, on entend un circuit de dérivation qui permet au second fluide de ne pas parcourir le réseau de tubulures de la matrice. A cette fin, un obturateur ou une vanne peut fermer le réseau et ouvrir le by-pass. La vanne peut être de toute nature et par exemple thermostatique ou à commande par détection d'une pression insuffisante dans le circuit d'huile (par exemple PRV pour Pressure Relief Valve). Ainsi, lorsque l'huile a une température inférieure à un seuil déterminé, elle passe dans le by-pass car il n'est pas utile de la refroidir dans l'échangeur et/ou l'huile n'est pas suffisamment fluide pour parcourir le réseau. Le seuil peut être par exemple 20°C ;
- le by-pass permet l'écoulement du second fluide selon une direction sensiblement axiale. En effet, comme les collecteurs peuvent être agencés du même côté de la matrice, le by-pass peut être compact et de conception simple ;
- des brides de fixation monoblocs avec la matrice. Ces brides peuvent être notamment faites de pattes sensiblement planes, présentant des surépaisseurs recevant des éléments d'assemblage (par exemple filetés) ;
- le by-pass, les collecteurs et au moins une bride de fixation peuvent être agencés circonférentiellement du même côté de la matrice. Ceci simplifie le montage de l'échangeur car l'ensemble des connexions peut être fait dans la même zone de l'échangeur : les connexions fluides au réseau d'huile, la fixation mécanique au carter, les connexions électriques pour la commande du by-pass ou le contrôle des flux (pressions, débits, températures, reçues de capteurs judicieusement placés) ;
- une grille de protection en amont de la traversée, la grille étant monobloc avec la matrice. Une telle grille permet de protéger la matrice d'éléments étrangers (débris, givre) ;
- une chambre de ralentissement en amont du réseau et éventuellement une chambre d'accélération en aval du réseau, la chambre de ralentissement et éventuellement la chambre d'accélération étant monobloc avec la matrice. Afin d'augmenter les échanges de chaleur, le flux d'air est ralenti, par exemple par l'augmentation de la section de passage en amont de la matrice.

De manière générale, les modes avantageux de chaque objet de l'invention sont également applicables aux autres objets de l'invention.

### Avantages apportés

L'invention permet d'augmenter l'échange de chaleur tout en limitant les pertes de charge de l'écoulement d'air. Dans le contexte d'un refroidisseur d'huile de turboréacteur, cette solution devient particulièrement pertinente puisque la source froide est à très basse température en plus d'être disponible en grande quantité vu le débit du flux secondaire.

### Brève description des dessins

La figure 1 représente une turbomachine axiale ;
La figure 2 illustre une vue en plan d'un échangeur selon l'invention ;
La figure 3 représente une section de l'échangeur dans le plan III:III défini en figure 4 ;
La figure 4 montre une vue de dessus radiale de l'échangeur ;
La figure 5 illustre une vue de l'échangeur circonférentielle ou parallèle à l'axe.

### Description des modes de réalisation

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

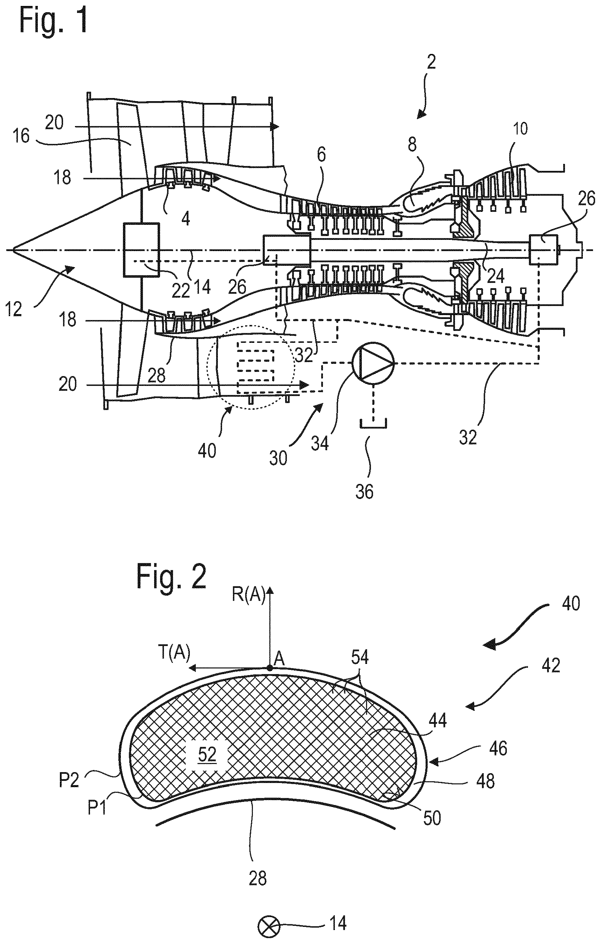

La figure 1 représente de manière simplifiée une turbomachine axiale 2. Le turboréacteur 2 comprend un premier compresseur, basse-pression 4 et un deuxième compresseur, haute-pression 6, une chambre de combustion 8 et une ou plusieurs turbines 10. En fonctionnement, la puissance mécanique de la turbine 10 transmise au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Une soufflante 16 est couplée au rotor 12 et génère un flux d'air qui se divise en un flux primaire 18 et en un flux secondaire 20 traversant un conduit annulaire (partiellement représenté) le long de la machine pour ensuite rejoindre le flux primaire en sortie de turbine.

Des moyens de démultiplication, tel un réducteur épicycloïdal 22, peuvent réduire la vitesse de rotation de la soufflante et/ou du compresseur basse-pression par rapport à la turbine associée. Le flux secondaire peut être accéléré de sorte à générer une réaction de poussée nécessaire au vol d'un avion.

Le rotor 12 comprend un arbre de transmission 24 monté sur le carter au moyen de deux paliers 26.

Une surface de carter 28 délimite radialement intérieurement le flux secondaire 20.

Afin de lubrifier les éléments tournants du turboréacteur 2, un circuit de lubrification 30 est prévu. Ce circuit 30 comprend des conduits 32 pour transporter l'huile aux organes du turboréacteur 2 la nécessitant, comme notamment la boite d'engrenage 22 et les paliers 26. Le circuit 30 comprend à cette fin une pompe 34 pour mettre en mouvement l'huile dans le circuit 30 et un réservoir 36.

Un échangeur à chaleur 40 est prévu pour réguler la température de l'huile dans le circuit 30. L'échangeur 40 peut être positionné dans le flux secondaire 20 pour refroidir l'huile grâce l'air froid du flux secondaire. Une zone préférentielle mais non limitative prévue pour l'implantation de l'échangeur est dessinée en pointillés sur la figure 1. L'échangeur peut être au contact et épousant la forme du carter 28. Il peut être à distance ou à l'inverse partiellement encastré dans le carter 28. Alternativement, ou en complément, l'échangeur 40 peut aussi être prévu en aval des vannes de bleed, pour réchauffer les fluides grâce à l'air chaud. Les caractéristiques avantageuses de l'échangeur peuvent être utiles pour échanger de la chaleur entre d'autres fluides de la turbomachine et à d'autres endroits.

Il est entendu que le circuit 30 comprend tous les organes permettant de contrôler la température, la pression et le débit de l'huile pour obtenir un fonctionnement optimal (capteurs, vannes, surpresseur, réducteur de débit, etc.).

Le réservoir 36 peut être fixé à la nacelle de la turbomachine 2, ou à un carter de compresseur. Le réservoir 36 peut être placé entre deux parois annulaires guidant des flux concentriques ; par exemple entre le flux secondaire 20 et le flux entourant la turbomachine 2, ou entre le flux primaire 18 et le flux secondaire 20.

La figure 2 montre une vue en plan d'un échangeur de chaleur 40 tel que celui représenté en figure 1, vu dans un plan perpendiculaire à l'axe 14 de la turbomachine 2. L'échangeur de chaleur 40 présente une forme générale arquée. Il épouse sensiblement un carter annulaire 28 de la turbomachine. Il est traversé par l'air du flux secondaire qui forme un premier fluide, et accueille de l'huile formant un deuxième fluide. Il comporte une matrice 42.

La matrice 42 comprend un réseau 44 et une enveloppe 46. L'enveloppe 46 est délimitée par une surface externe 48 et une surface interne 50. La surface interne 50 délimite une traversée 52 qu'emprunte l'air du flux secondaire au travers de la matrice 42. La surface externe 48 est au contact de l'air du flux secondaire qui ne passe pas dans la matrice 42.

Le réseau 44 délimite une multitude de subdivisions de la traversée 48 sous forme de couloirs 54.

En tout point de la matrice, la courbure générale de la matrice 42 et l'axe 14 définissent une direction radiale et une direction circonférentielle (ou tangentielle). Le point A sur la figure 2 est un point médian supérieur de la matrice. La direction radiale en ce point est notée R(A) et la direction circonférentielle est notée T(A).

La surface externe 48 est visible sur cette vue en plan car l'enveloppe 46 a une dimension qui varie le long de l'axe 14. Ces variations sont à la fois circonférentielles et radiales car on voit la surface externe 48 à gauche et à droite de la matrice sur la figure 2, ainsi qu'en-haut et en bas.

La mention P illustre le profil externe de l'enveloppe en plusieurs positions axiales. Sur la figure 2 qui est une vue en plan, P1 désigne le profil le plus petit, par exemple au niveau amont, où se rejoignent surface externe 48 et surface interne 50 minimum. P2 désigne le profil le plus grand.

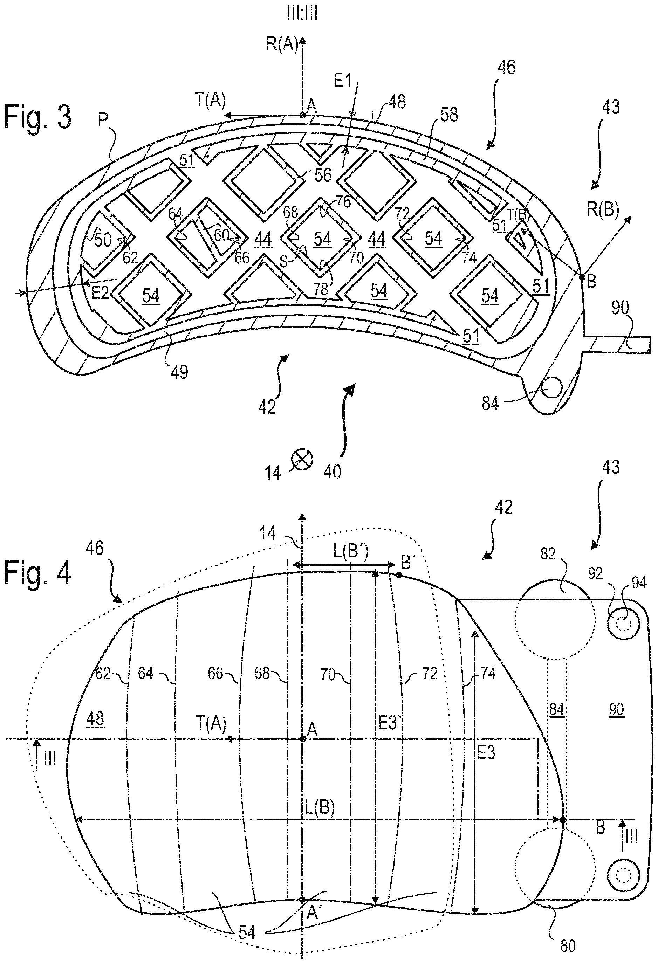

La figure 3 illustre une section agrandie de l'échangeur 40 et notamment de sa matrice 42 dans le plan perpendiculaire à l'axe 14 et indiqué III:III sur la figure 4. Seuls quelques couloirs 54 sont représentés et les dimensions ne sont pas à l'échelle. Notamment l'épaisseur des cloisons et des couloirs 54 est exagérée pour faciliter la compréhension du dessin.

Le réseau 44 est dans cet exemple un treillis ou un entrecroisement de tubulures parcourues par le second fluide. Tout type de tubulure peut être utilisé dans cette matrice. Seul un exemple illustratif est exposé ici. Le réseau 44 délimite les couloirs 54. La section des couloirs 54 est notée S. « Section » est à comprendre ici dans le sens d'une courbe issue de l'intersection d'une surface (la surface 3D des couloirs) et d'un plan (celui de la figure 3). Dans le plan de la figure 3, la section est un losange. Dans un plan amont ou aval, le losange peut avoir des dimensions qui varient. Par exemple, lorsque le profil P s'agrandit selon une direction donnée (par exemple radiale), les couloirs 54 peuvent grandir radialement d'une quantité proportionnelle à l'agrandissement de l'enveloppe.

A l'inverse, les couloirs 54 peuvent avoir un comportement contraire à celui de l'enveloppe.

Les variations de dimensions des couloirs permettent en particulier de diminuer les pertes aérodynamiques que pourrait subir l'air lors de son écoulement à l'intérieur de la matrice.

La section S des couloirs 54 peut également changer de forme le long de l'axe, passant d'une forme à une autre, par exemple d'un losange à une forme rectangulaire, carré, voire circulaire ou ovale, ou l'inverse.

L'enveloppe 46 a elle-même une cavité 49 aménagée entre sa surface externe 48 et sa surface interne 50, la cavité 49 permettant la circulation du second fluide.

La cavité 49 de l'enveloppe 46 communique avec le réseau 44, au niveau de jonctions 51. Au moins deux jonctions 51 sont prévues pour l'amenée et la sortie du second fluide dans le réseau 44. Les jonctions 51 sont adéquatement positionnées pour faciliter l'écoulement du second fluide.

L'ensemble du réseau 44 et de l'enveloppe 46 sont monoblocs, réalisés par un procédé de fabrication additive, tel que ALM (additive layer manufacturing) à partir de poudre métallique comme par exemple une poudre à base d'aluminium ou de titane. L'épaisseur des couches peut être comprise entre 10 µm et 150 µm, ce qui permet d'atteindre une épaisseur minimale pour les parois intérieures de la matrice allant de 0,40 mm à 0.8 mm. Les parois de l'enveloppe 46 peuvent être plus épaisses et être optimiser pour ne pas être trop lourdes tout en assurant la tenue mécanique de la matrice.

La structure est autoporteuse, en ce sens que les tubulures 44 sont formées dans la matrice sans nécessiter de moyens de fixation.

L'échange de chaleur entre le premier et le second fluide s'effectue au travers des parois 56 et 58.

L'épaisseur des parois 56 et 58 peut varier selon les trois dimensions de l'espace. Par exemple, lorsque l'enveloppe 46 et les couloirs 54 grandissent, l'épaisseur des parois peut également augmenter. Alternativement, les épaisseurs peuvent varier indépendamment des variations de l'enveloppe 46 ou des couloirs 54. Alternativement, les épaisseurs des parois 56 et 58 peuvent être constantes.

Des ailettes 60 peuvent être agencées dans les couloirs 54 pour maximiser les surfaces d'échanges entre les fluides, par exemple des ailettes successivement inclinées le long du parcours du premier fluide, formant ainsi un passage hélicoïdal dans les couloirs 54.

La figure 3 illustre l'épaisseur de l'enveloppe en deux endroits, E1 et E2. Celles-ci expriment la distance entre la surface externe 48 et la surface interne 50, mesurée en un point donné et normalement aux surfaces - ou si les surfaces interne et externe ne partagent pas la même normale, normalement à une direction moyenne aux deux normales. De la même manière que pour les parois 56 et 58, l'épaisseur de l'enveloppe E peut varier dans les trois directions de l'espace, et notamment le long de l'axe 14.

La figure 3 montre des points remarquables 62, 64, 66, 68, 70, 72, 74 qui sont ici des arêtes de couloirs 54 placés à une position radiale sensiblement identique. Les points 76 et 78 sont deux arêtes de positions circonférentielles identique.

La cavité 49 permet au second fluide de circuler d'une part entre un collecteur d'entrée (noté 80 sur la figure 4) et le réseau 44, et d'autre part entre le réseau 44 et un collecteur de sortie (noté 82 sur la figure 4). Les collecteurs d'entrée 80 et de sortie 82 sont préférentiellement monobloc avec la matrice 42 et communiquent avec la cavité 49 par des passages appropriés. Comme il est visible sur la figure 4, les collecteurs 80, 82 sont avantageusement positionnés d'un même côté circonférentiel 43 de la matrice 42.

Un by-pass 84 reliant les collecteurs 80, 82 peut être aménagé dans la matrice 42. Celui-ci permet, sous l'action d'obturateurs ou de vannes (non représentés), de shunter le réseau 44 et de faire passer le second fluide directement du collecteur d'entrée 80 au collecteur de sortie 82.

En références aux figures 3 et 4, on observe que du même côté 43 de la matrice 42 que les collecteurs 80, 82 une bride 90 de fixation peut être prévue avec par exemple un bossage 92 recevant un taraudage 94. Une autre bride (non représentée) peut être agencée à un autre endroit de la matrice, par exemple du côté opposé à la bride 90.

Enfin, la figure 3 montre le point A, médian, similaire à la figure 2, ainsi qu'un point B matérialisant le point circonférentiel extrême de l'enveloppe.

La figure 4 illustre une vue en plan perpendiculaire à la direction R(A) de la figure 3, vue radialement depuis l'extérieur de la matrice 42.

Cette vue illustre l'enveloppe 46 et en particulier sa dimension axiale E3, qui varie circonférentiellement (E3' est supérieur à E3). De même, cette figure montre les variations de la largeur circonférentielle de la matrice L (L'>L).

La matrice peut avoir toute forme aérodynamique symétrie ou asymétrique et appropriée pour son intégration dans sa zone d'implantation. La zone d'implantation peut comporter des « obstacles » comme par exemple des capteurs, des vannes ou des conduits de diverses nature et la matrice peut être localement ou globalement déformée de sa courbure générale pour pouvoir épouser ces « obstacles ».

On observe que pour permettre une meilleure pénétration de l'air dans la matrice, l'enveloppe peut être profilée.

En pointillés est illustrée une forme alternative pour le bord l'enveloppe 46

Le point B matérialise la position axiale où la dimension circonférentielle est la plus grande. Le point B' illustre la dimension circonférentielle la plus petite. L'écart entre la largeur circonférentielle de B et celle de B' peut être d'au moins 10% (on a donc L(B)/L(B')>1.1). Tel qu'illustré, ce rapport est voisin de 5.

De même, le point A' illustre la position médiane amont de la surface externe. Les coordonnées radiales de A et de A' peuvent différer d'au moins 10% (on a donc R(A)/R(A')>1.1).

Les points caractéristiques 62, 64, 66, 68, 70, 72, 74 sont représentés en traits mixtes pour illustrer les dimensions des couloirs 54 qui ne sont pas rectilignes ou parallèles à l'axe 14. On observe que dans l'exemple illustré, les tendances à l'augmentation ou diminution de l'enveloppe sont respectées par les couloirs 54.

La figure 4 illustre également la bride de fixation 90 et le plan III:III de la section de la vue de la figure 3 ainsi que les collecteurs 80, 82 et le by-pass 84 comme discuté plus haut.

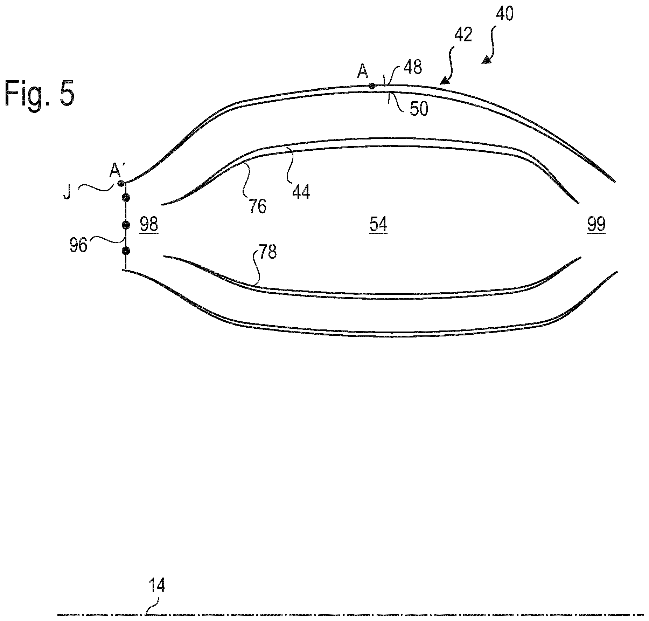

La figure 5 illustre schématiquement et dans un plan parallèle à l'axe 14, un échangeur 40 comme illustré précédemment. Les échelles ne sont pas respectées, afin de faciliter la compréhension de la figure. Dans cette vue, on observe une grille 96 de protection visant à protéger la matrice 42 et en particulier le réseau 44. Cette grille peut être monobloc avec la matrice 42.

Une chambre de ralentissement 98 et une chambre d'accélération 99 peuvent être prévues pour ralentir puis accélérer le flux d'air. Ces chambres 98, 99 peuvent prendre la forme d'une tuyère à section abruptement variable. Ces chambres 98, 99 sont monoblocs avec l'enveloppe 46 de la matrice 42.

La figure 5 montre également les lignes 76 et 78 identifiées sur la figure 3. On observe que la hauteur (radiale) du couloir 54 varie le long de l'axe. Dans ce cas, les variations de hauteur du couloir 54 suivent la tendance des variations de l'enveloppe 46, c'est-à-dire une augmentation dans une première moitié axiale de la matrice, puis une diminution.

Si les variations de l'enveloppe et des couloirs sont illustrées ici comme augmentant puis diminuant, d'amont vers l'aval, l'homme du métier comprendra que diverses alternatives sont possibles, notamment une décroissance suivie d'une croissance ou des variations plus complexes avec des points d'inflexion.

En amont et en aval de la matrice 42, la surface externe 48 et la surface interne 50 de l'enveloppe se rejoignent. Cette jointure peut être aménagée pour minimiser les pertes de charge, par exemple à l'aune d'un bord d'attaque et d'un bord de fuite d'une aube ou d'une aile. Le lettre J référence la jointure amont.

De même, les parois 56 du réseau 44 se rejoignent en amont et en aval de la matrice et peuvent donc être aménagée en bord d'attaque et bord de fuite.

La matrice pour échangeur de chaleur selon l'invention est destinée à intégrer un turboréacteur d'aéronef mais n'y est pas limitée. L'échangeur de chaleur selon l'invention est préférentiellement destiné à échanger de la chaleur entre de l'air et de l'huile mais ne se limite pas à cette utilisation.

Dans les modes de réalisation illustrés, l'axe 14 de l'échangeur est confondu avec l'axe de la turbomachine mais l'invention n'est pas limitée à cette conception et l'axe de l'échangeur peut être différent de celui de la turbomachine.

Aussi, l'enveloppe est représentée comme ayant une forme de symétrie mais l'invention ne se limite pas à une telle conception.

## Revendications

1. Matrice (42) pour échangeur (40) de chaleur, la matrice (42) comprenant :
une enveloppe (46) avec une surface intérieure (50) délimitant spatialement une traversée (52) pour l'écoulement d'un premier fluide, et une surface extérieure (48), l'enveloppe (46) étant de forme générale arquée, définissant une direction axiale (14) qui est la direction principale d'écoulement du premier fluide, ainsi qu'une direction radiale (R) et une direction circonférentielle (T), la surface extérieure (48) définissant un profil extérieur (P) de la matrice (42), vu dans un plan perpendiculaire à la direction principale (14) ; et
un réseau (44) s'étendant dans la traversée (52) et dans lequel circule le deuxième fluide ;
**caractérisée en ce que**
selon la direction axiale (14), le profil extérieur (P) varie radialement et circonférentiellement,
ces variations se traduisant par le fait que tout point de la surface externe qui parcourt axialement la surface externe en conservant sa position circonférentielle a une position radiale qui varie ; et tout point de la surface externe qui parcourt axialement la surface externe en conservant sa position radiale a une position circonférentielle qui varie ;
et plus précisément,
la variation circonférentielle se manifeste par le fait que le profil extérieur (P) a une largeur circonférentielle (L), la largeur circonférentielle (L) variant entre une largeur circonférentielle minimale (L(B')) et une largeur circonférentielle maximale (L(B)), la largeur circonférentielle maximale (L(B)) étant au moins 10% supérieure à la largeur circonférentielle minimale (L(B')), et
la variation radiale se manifeste par le fait que le profil extérieur (P) a un point médian radialement extérieur (A, A'), la coordonnée radiale de ce point médian (R(A), R(A')) variant entre une coordonnée minimale (R(A')) à une position extrême amont de la matrice et une coordonnée maximale (R(A)), la coordonnée radiale maximale (R(A)) étant au moins 10% supérieure à la coordonnée radiale minimale (R(A')).

2. Matrice (42) selon la revendication 1, **caractérisée en ce que** le profil extérieur (P) s'agrandit radialement et circonférentiellement dans la partie amont de la matrice (42).

3. Matrice (42) selon la revendication 1 ou 2, **caractérisée en ce que** le profil extérieur (P) se rétrécit radialement et circonférentiellement dans la partie aval de la matrice (42).

4. Matrice (42) selon l'une des revendications 1 à 3, **caractérisée en ce que** l'épaisseur (E) de l'enveloppe (46) varie axialement, circonférentiellement et radialement.

5. Matrice (42) selon l'une des revendications 1 à 4, **caractérisée en ce que** le réseau (44) subdivise la traversée (52) en une pluralité de couloirs (54), chaque couloir (54) ayant, dans un plan perpendiculaire à la direction axiale (14), une section (S) qui varie axialement.

6. Matrice (42) selon la revendication 5, **caractérisée en ce que** les sections (S) des couloirs (54) et le profil extérieur (P) varient selon une tendance commune.

7. Matrice (42) selon l'une des revendications 1 à 6, **caractérisée en ce que** l'enveloppe (46) et le réseau (44) sont monoblocs, réalisés par fabrication additive.

8. Matrice (42) selon l'une des revendications 1 à 7, **caractérisée en ce que** le réseau (44) est un entre-croisement de tubulures formant des couloirs (54) décrivant une pluralité homogène ou hétérogène de formes géométriques régulières ou non régulières dans la traversée (52).

9. Échangeur (40) de chaleur comprenant une matrice (42) selon l'une des revendications précédentes, **caractérisé par** un collecteur d'entrée (80) et un collecteur de sortie (82) pour le second fluide, les collecteurs (80, 82) étant monoblocs avec la matrice (42), et les collecteurs (80, 82) pouvant être tous deux agencés circonférentiellement d'un même côté (43) de la matrice (42).

10. Échangeur (40) selon la revendication 9, **caractérisé par** un by-pass (84) reliant le collecteur d'entrée (80) au collecteur de sortie (82), le by-pass (84) étant monobloc avec la matrice.

11. Échangeur (40) selon la revendication 10, **caractérisé en ce que** le by-pass (84) permet l'écoulement du second fluide selon une direction sensiblement axiale.

12. Échangeur (40) selon l'une des revendications 9 à 11, **caractérisé par** des brides de fixation (90) monoblocs avec la matrice.

13. Échangeur (40) selon les revendications 10 et 12, **caractérisé en ce que** le by-pass (84), les collecteurs (80, 82) et au moins une bride de fixation (90) sont agencés circonférentiellement du même côté (43) de la matrice (42).

14. Échangeur (40) selon l'une des revendications 9 à 13, **caractérisé par** une grille (96) de protection en amont de la traversée (52), la grille (96) étant monobloc avec la matrice (42).

15. Échangeur (40) selon l'une des revendications 9 à 14, **caractérisé par** une chambre de ralentissement (98) en amont du réseau (44) et éventuellement une chambre d'accélération (99) en aval du réseau (44), la chambre de ralentissement (98) et éventuellement la chambre d'accélération (99) étant monobloc avec la matrice (42).

## Patentansprüche

1. Eine Struktur (42) für einen Wärmetauscher (40), wobei die Struktur (42) Folgendes umfasst: eine Schale (46) mit einer Innenfläche (50), die einen Durchgang (52) für die Strömung eines ersten Fluids räumlich begrenzt, und einer Außenfläche (48), wobei die Schale (46) eine allgemein bogenförmige Form hat, die eine axiale Richtung (14), die die Hauptströmungsrichtung des ersten Fluids ist, sowie eine radiale Richtung (R) und eine Umfangsrichtung (T) definiert, wobei die Außenfläche (48) ein Außenprofil (P) der Form (42) in einer Ebene senkrecht zur Hauptrichtung (14) betrachtet definiert; und
ein Gitter (44), das sich in den Durchgang (52) erstreckt und durch das das zweite Fluid fließt;
**dadurch gekennzeichnet, dass**
je nach der axialen Richtung (14) das Außenprofil (P) radial und in Umfangsrichtung variiert,
diese Variationen dazu führen, dass jeder Punkt auf der äußeren Oberfläche, der die äußere Oberfläche axial durchquert, während seine Umfangsposition beibehalten wird, eine variierende radiale Position hat; und jeder Punkt auf der äußeren Oberfläche, der die äußere Oberfläche axial durchquert, während seine radiale Position beibehalten wird, eine variierende Umfangsposition hat;
und, genauer betrachtet,
eine Umfangsvariation **dadurch gekennzeichnet ist, dass** das Außenprofil (P) eine Umfangsbreite (L) aufweist, wobei die Umfangsbreite (L) zwischen einer minimalen Umfangsbreite (L(B')) und einer maximalen Umfangsbreite (L(B)) variiert, wobei die maximale Umfangsbreite (L(B)) mindestens 10% größer als die minimale Umfangsbreite (L(B')) ist, und
eine radiale Variation **dadurch gekennzeichnet ist, dass** das Außenprofil (P) einen äußeren radialen Mittelpunkt (A, A') aufweist, wobei die radiale Koordinate dieses Mittelpunkts (R(A), R(A')) zwischen einer minimalen Koordinate (R(A')) an einer extremen Position stromaufwärts der Matrize und einer maximalen Koordinate (R(A)) variiert, wobei die maximale radiale Koordinate (R(A)) mindestens 10% größer als die minimale radiale Koordinate (R(A')) ist.

2. Die Struktur (42) nach Anspruch 1, **dadurch gekennzeichnet, dass** das Außenprofil (P) im stromaufwärtigen Teil der Struktur (42) in radialer Richtung und in Umfangsrichtung zunimmt.

3. Eine Struktur (42) nach Anspruch 1 oder 2, **dadurch gekennzeichnet, dass** sich das Außenprofil (P) im stromabwärtigen Teil der Struktur (42) in radialer Richtung und in Umfangsrichtung verjüngt.

4. Eine Struktur (42) nach einem der Ansprüche 1 bis 3, **dadurch gekennzeichnet, dass** die Dicke (E) des Mantels (46) axial, in Umfangsrichtung und in radialer Richtung variiert.

5. Eine Struktur (42) nach einem der Ansprüche 1 bis 4, **dadurch gekennzeichnet, dass** das Gitter (44) den Durchgang (52) in mehrere Bahnen (54) unterteilt, wobei jede Bahn (54) in einer Ebene senkrecht zur axialen Richtung (14) einen axial variierenden Abschnitt (S) aufweist.

6. Eine Struktur (42) nach Anspruch 5, **dadurch gekennzeichnet, dass** sich die Querschnitte (S) der Fahrspuren (54) und das Außenprofil (P) gemäß einer gemeinsamen Tendenz verändern.

7. Eine Struktur (42) nach einem der Ansprüche 1 bis 6, **dadurch gekennzeichnet, dass** die Schale (46) und das Gitter (44) aus einem Stück bestehen und durch additive Fertigung hergestellt sind.

8. Eine Struktur (42) nach einem der Ansprüche 1 bis 7, **dadurch gekennzeichnet, dass** das Gitter (44) eine Vernetzung von Rohren ist, die Rillen (54) bilden, die eine homogene oder heterogene Vielzahl von regelmäßigen oder unregelmäßigen geometrischen Formen im Durchgang (52) beschreiben.

9. Ein Wärmetauscher (40) mit einer Struktur (42) nach einem der vorhergehenden Ansprüche, **gekennzeichnet durch** einen Einlassverteiler (80) und einen Auslassverteiler (82) für das zweite Fluid, wobei die Verteiler (80, 82) in die Struktur (42) eingebaut sind und die Verteiler (80, 82) beide in Umfangsrichtung auf derselben Seite (43) der Struktur (42) angeordnet sein können.

10. Der Wärmetauscher (40) nach Anspruch 9, **gekennzeichnet durch** einen Bypass (84), der den Einlasssammler (80) mit dem Auslasssammler (82) verbindet, wobei der Bypass (84) in die Struktur eingebaut ist.

11. Der Wärmetauscher (40) nach Anspruch 10, **dadurch gekennzeichnet, dass** der Bypass (84) es dem zweiten Fluid ermöglicht, in einer im Wesentlichen axialen Richtung zu fließen.

12. Der Wärmetauscher (40) nach einem der Ansprüche 9 bis 11, **gekennzeichnet durch** in die Struktur integrierte Halteflansche (90).

13. Der Wärmetauscher (40) nach einem der Ansprüche 10 und 12, **dadurch gekennzeichnet, dass** der Bypass (84), die Verteiler (80, 82) und mindestens ein Befestigungsflansch (90) in Umfangsrichtung auf der gleichen Seite (43) der Struktur (42) angeordnet sind.

14. Der Wärmetauscher (40) nach einem der Ansprüche 9 bis 13, **gekennzeichnet durch** ein Schutzgitter (96), das stromaufwärts des Durchlasses (52) angeordnet ist, wobei das Gitter (96) in die Struktur(42) integriert ist.

15. Der Wärmetauscher (40) nach einem der Ansprüche 9 bis 14, **gekennzeichnet durch** eine stromaufwärts des Gitters (44) angeordnete Verzögerungskammer (98) und optional eine stromabwärts des Gitters (44) angeordnete Beschleunigungskammer (99), wobei die Verzögerungskammer (98) und optional die Beschleunigungskammer (99) in die Struktur(42) eingebaut sind.

## Claims

1. Matrix (42) for a heat exchanger (40), the matrix (42) comprising:
an envelope (46) with an inner surface (50) spatially delimiting a path (52) for the flow for a first fluid, and an outer surface (48); the envelope (46) being generally arcuate in shape, defining an axial direction (14) which is the main direction of the flow of the first fluid, and a radial direction (R) and a circumferential direction (T); the outer surface (48) defining an outer outline (P) of the matrix (42), seen in a plane perpendicular to the main direction (14); and
a network (44) extending within the path (52) and within which the second fluid flows;
**characterized in that**
in the axial direction (14), the outer outline (P) varies radially and circumferentially,
these variations being reflected in the fact that any point on the external surface which axially travels on the external surface while retaining its circumferential position has a radial position which varies; and any point on the external surface which axially travels on the external surface while retaining its radial position has a circumferential position which varies; and
more specifically,
the circumferential variation is manifested by the fact that the outer outline (P) has a circumferential width (L), the circumferential width (L) varying between a minimum circumferential width (L(B')) and a maximum circumferential width (L(B)), the maximum circumferential width (L(B)) being at least 10% greater than the minimum circumferential width (L(B')), and
the radial variation is manifested by the fact that the outer outline (P) has a radially outer midpoint (A, A'), the radial coordinate of this midpoint (R(A), R(A')) varying between a minimum coordinate (R(A')) at an extreme upstream position of the matrix and a maximum coordinate (R(A)), the maximum radial coordinate (R(A)) being at least 10% greater than the minimum radial coordinate (R(A')).

2. Matrix (42) according to claim 1, **characterized in that** the outer outline (P) is expanded radially and circumferentially in an upstream portion of the matrix (42).

3. Matrix (42) according to claim 1 or 2, **characterized in that** the outer outline (P) tapers radially and circumferentially in a downstream portion of the matrix (42).

4. Matrix (42) according to one of claims 1 to 3, wherein the thickness (E) of the envelope (46) varies axially, circumferentially and radially.

5. Matrix (42) according to one of claims 1 to 4, **characterized in that** the network (44) subdivides the path (52) into a plurality of corridors (54), each corridor (54) having, in a plane perpendicular to the axial direction (14), a cross-section (S) which varies axially.

6. Matrix (42) according to claim 5, **characterized in that** the cross-sections (S) of the corridors (54) and the outer outline (P) vary according to a common trend.

7. Matrix (42) according to one of claims 1 to 6, **characterized in that** the envelope (46) and the network (44) are integrally made by additive manufacturing.

8. Matrix (42) according to one of claims 1 to 7, **characterized in that** the network (44) is an interweaving of tubing forming corridors (54) delimiting a homogeneous or heterogeneous plurality of regular or irregular geometrical shapes in the path (52).

9. Heat exchanger (40) comprising a matrix (42) according to one of the preceding claims, **characterized by** an inlet manifold (80) and an outlet manifold (82) for the second fluid, the manifolds (80, 82) being integral with the matrix (42), and the manifolds (80, 82) being both circumferentially arranged on the same side of the matrix (42).

10. Heat exchanger (40) according to claim 9, **characterized by** a bypass (84) connecting the inlet manifold (80) to the outlet manifold (82), the bypass (84) being integral with the matrix.

11. Heat exchanger (40) according to claim 10, **characterized in that** the bypass (84) allows the flow of the second fluid in a substantially axial direction.

12. Heat exchanger (40) according to one of claims 9 to 11, **characterized by** fastening flanges (90) integral with the matrix.

13. Heat exchanger (40) according to claims 10 and 12, wherein the bypass (84), the manifolds (80, 82) and at least one fastening flange (90) are arranged circumferentially on the same side (43) of the matrix (42).

14. Heat exchanger (40) according to one of claims 9 to 13, **characterized by** a protective grid (96) upstream of the path (52), the protective grid (96) being integral with the matrix (42).

15. Heat exchanger (40) according to one of claims 9 to 14, **characterized by** a braking chamber (98) upstream of the network (44) and optionally an acceleration chamber (99) downstream of the network (44), the braking chamber (98) and the acceleration chamber (99) being integral with the matrix (42).
